(19) **Europäisches Patentamt European Patent Office Office européen des brevets**

(11) **EP 3 968 111 B1**

(12) **EUROPEAN PATENT SPECIFICATION**

(45) Date of publication and mention
of the grant of the patent:
**17.04.2024 Bulletin 2024/16**

(21) Application number: **20195343.7**

(22) Date of filing: **09.09.2020**

(51) International Patent Classification (IPC):
**G05B 23/02** (2006.01)    **F02C 9/00** (2006.01)
**G05B 13/04** (2006.01)    **G06N 20/00** (2019.01)

(52) Cooperative Patent Classification (CPC):
**G05B 23/0254; F02C 9/00; G05B 13/04;**
F05D 2260/80; G05B 2219/33034;
G05B 2219/33038

(54) **METHOD FOR MONITORING THE OPERATION OF A MACHINE AND COMPUTER-IMPLEMENTED MONITORING SYSTEM FOR IMPLEMENTING IT**

VERFAHREN ZUR ÜBERWACHUNG DES BETRIEBS EINER MASCHINE UND COMPUTERIMPLEMENTIERTES ÜBERWACHUNGSSYSTEM ZU SEINER DURCHFÜHRUNG

PROCÉDÉ DE SURVEILLANCE DU FONCTIONNEMENT D'UNE MACHINE ET SYSTÈME DE SURVEILLANCE DE MIS EN UVRE PAR ORDINATEUR POUR LA MISE EN UVRE DE CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2022 Bulletin 2022/11**

(73) Proprietor: **Ansaldo Energia Switzerland AG 5400 Baden (CH)**

(72) Inventors:
• **LOTT, Philippe 68480 BIEDERTHAL (FR)**
• **DIGELE, Reiner 5023 BIBERSTEIN (CH)**
• **RINN, Joerg 5400 BADEN (CH)**
• **ZIERER, Thomas 5408 ENNETBADEN (CH)**

(74) Representative: **Studio Torta S.p.A. et al Corso Magenta, 56 20123 Milano (IT)**

(56) References cited:
EP-A1- 3 270 241    EP-A1- 3 628 851
EP-A2- 2 570 616    US-A1- 2015 185 716

**Description**

TECHNICAL FIELD

The present invention relates to a method for monitoring the operation of a machine and a computer-implemented monitoring system for implementing it.

The machine can be part of a power plant for electric power generation, such as a gas turbine, a steam turbine, an electric generator such as a turbogenerator or a hydro generator. The machine can also be a power plant for electric power generation. In the following reference to a gas turbine will be specifically made.

BACKGROUND

During operation, machines such as gas turbines may undergo damages that can affect their operation.

In case of large damages, such as detachment of a full turbine or compressor blade, the security system of the machine can stop the machine operation in order to safeguard machine integrity and allow the required repairs.

In case of small damages that do not trigger an intervention of the safety system, for example if only a part of a compressor blade flies away or a seal breaks such that machine operation can continue more or less unaffected, the machine will continue to operate but the damage will worsen, in some cases causing in the medium or long term large damages that require long outages to be repaired.

A first approach to cope with these small damages is to monitor the variations of average values of some parameters. This approach is very dependent from the size of the time window where the average values of the parameters are measured, because short windows will provide many false alarms and long windows will in many cases not raise any alarms; this method in therefore not reliable.

A second approach to cope with small damages relies on artificial intelligence and machine learning and provides for the monitoring of some parameters, to identify patterns indicating that problems have arisen based on a database of cases where the machine is known to have failed. This method is very computationally intensive and requires very large reliable data on machine failures.

According to US 2015/185716 A1 in a method for monitoring the operation of a machine at least a function linking at least one control parameter to at least one operating parameter is provided. The machine is operated and the control parameter and the operating parameter are measured while the machine is operating. On the basis of the at least one measured operating parameter, the control parameter is calculated by means of the function. The measured control parameter is compared with the calculated control parameter and an alarm is generated when they do not match. In addition, a fitting time window is defined and the function is adjusted based on the operating parameter and on the control parameter measured through the fitting time window. An operating time window is defined, which is temporally shifted after the fitting time window. The function based on a given fitting time window is used over the whole operating time window.

Other examples of known methods are disclosed in EP 2 570 616 A2 and in EP 3 628 851 A1.

SUMMARY

An aspect of the invention includes providing a method for monitoring the operation of a machine according to claim 1 and a computer-implemented monitoring system according to claim 11 for implementing it that are reliable and at the same time require limited computational resources and data.

These and further aspects are attained by providing a method and a computer-implemented monitoring system in accordance with the accompanying claims.

BRIEF DESCRIPTION OF THE DRAWINGS

Further characteristics and advantages will be more apparent from the description of a preferred but non-exclusive embodiment of the method and system, illustrated by way of non-limiting example in the accompanying drawings, in which:

Figure 1 shows a gas turbine;
Figure 2 shows a timeline with a fitting time window.

DETAILED DESCRIPTION OF EXEMPLARY EMBODIMENTS

SYSTEM

With reference to the figures, these show a machine such as a gas turbine 1; even if a gas turbine is specifically described in the following, other types of machines can be monitored with this method, such as electric generators (i.e. turbogenerators or hydro generators) or steam turbines or others; the machine can also be a complex arrangement of a plurality of machines, such as a power plant for electric power generation.

The gas turbine 1 has a compressor 2, a combustion chamber 3 and a turbine 4; different arrangements are as known possible and e.g. the gas turbine can have a second combustion chamber downstream of a first combustion chamber with an air diluter and/or a high pressure turbine between the two combustion chambers.

The inlet of the compressor is usually provided with VIGV 8 (Variable Inlet Guide Vanes), i.e. adjustable guide vanes that regulate the amount of air that is admitted into the compressor and the compressor and the turbine have rotor blades and vanes.

The gas turbine 1 typically has a control system and a safety system; these two systems can be implemented by separate or same circuitry.

The control system receives data input (e.g. ambient pressure, temperature, humidity, required power, etc.) and supplies control data for driving the gas turbine (e.g. VIGV position, fuel mass flow supply, etc.).

The safety system likewise receives input data, which can be same or different from the data received by the control system, and trips the gas turbine in case these input data show irregular and abnormal values, indicating that damages have occurred in the gas turbine.

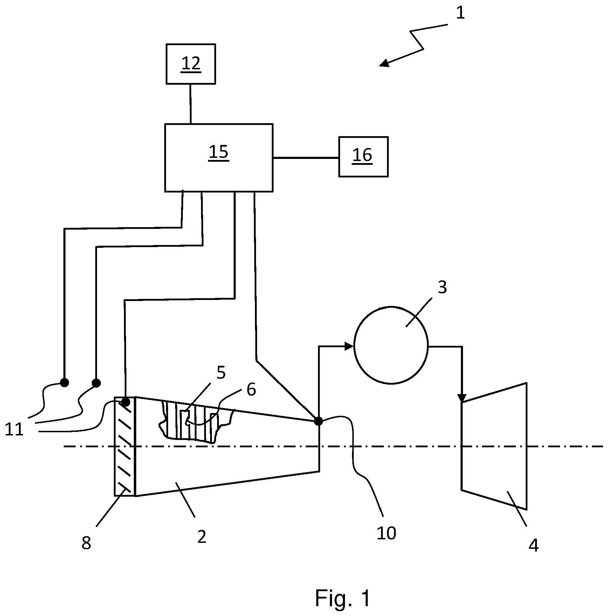

During operation the gas turbine may undergo small damages, which do not trigger the safety system, thus after the small damage occurs the gas turbine operation continues substantially in the same way as before. For example such small damages could include the flying away of a part of a compressor or turbine blade 5, or the breaking of a seal in the combustion chamber, etc.. Even if such damages do not cause failure of the gas turbine, they start a degradation process that often over time causes the gas turbine failure. In figure 1 reference 6 indicates the small damage of the compressor rotor blade 5 due to a piece of the blade that flew away.

The gas turbine is advantageously provided with a computer-implemented monitoring system, which is able to detect such small damages, which do not cause a trip of the gas turbine but cause anyway irregularities of its operation. The monitoring system in thus provided in addition to the control system and safety system and may be implemented with same or different circuitry as the control system and/or safety system.

In particular, the computer-implemented monitoring system is able to detect the small irregularities in the operation of the gas turbine, whereas the safety system can detect large irregularities (e.g. arising when a complete blade flies away destroying the following compressor or turbine stages and/or casing, or components in the combustion chamber burn because of a flash back, etc.).

The computer-implemented monitoring system comprises first sensors 10 to measure one or more control parameters and second sensors 11 to measure one or more operating parameters of the gas turbine.

The control parameters and operating parameters can be different according to the requirements. In general, the control parameters indicate the operating conditions of the gas turbine and the operating parameters indicate the boundary conditions that determine the operation of the gas turbine.

The control parameters include as an example the pressure at the outlet of the compressor 2 and/or the pressure at the outlet of the combustion chamber 3 and/or the temperature at the outlet of the compressor 2 and/or the temperature at the outlet of the combustion chamber 3 and/or the flame temperature and/or the gas turbine output power, etc..

The operating parameters include as an example the VIGV position (which is indicative of the mass air flow through the gas turbine) and/or the environment humidity and/or the environmental temperature and/or the gas turbine output power, etc..

Naturally, the control parameters and the operating parameters are not the same for one and the same machine, but for different machines they can be selected as required; for example, the output power can be selected as a control parameter or as an operating parameter.

The computer-implemented monitoring system further includes an elaborating unit 15, that is connected to a memory 12. The elaborating unit is arranged for running a program code for performing the method of the invention and the memory 12 is arranged for storing the data measured by the first sensors 10 and second sensors 11 and the results of the calculations of the elaborating unit 15.

In a preferred embodiment, one computer or other electronic device defines the elaborating unit 15 and the memory 12.

The elaborating unit 15 is in turn connected to an output device 16, arranged to make available the results of the elaboration. The output device can be any type of known machine-human interface, such as monitor, printers, etc.

METHOD

The method for monitoring the operation of a machine comprises providing one or more functions linking one or more control parameters to one or more operating parameters.

In a first example the at least a function is a polynomial function and the control parameters and operating parameters are linked via one or more coefficients. In this case the functions can be in general defined as

$$CP = a \cdot OP1 + b \cdot OP2 + c \cdot OP3 + ... + d \cdot OP1^2 + e \cdot OP^2 + f \cdot OP^2 + ...$$

wherein:

- CP is a generic control parameter,
- OP1, OP2, OP3 are operating parameters,
- a, b, c, d, e, f ... are coefficients linking the operating parameters to the control parameters.

In general, for a generic number of m control parameters and n operating parameters, the functions can be expressed in matrix form as

$$\begin{pmatrix} a1,1 & \cdots & a1,n \\ a2,1 & \cdots & a2,n \\ \vdots & \ddots & \vdots \\ am,1 & \cdots & am,n \end{pmatrix} \cdot \begin{pmatrix} OP1 \\ \vdots \\ OPn \end{pmatrix} = \begin{pmatrix} CP1 \\ \vdots \\ \vdots \\ CPm \end{pmatrix}$$

wherein:

- a1,1-am,n are the coefficients linking the operating parameters OP1-OPn to the control parameters CP1-CPm,
- OP1-OPn are the operating parameters,
- CP1-CPm are the control parameters.

The coefficients can be defined by operating the machine, measuring the control parameters and operating parameters and selecting appropriate coefficients, such that the operating parameters by means of the functions provide the control parameters.

A specific example of a polynomial function can be the following

$$\begin{pmatrix} a1,1 & a1,2 & a1,3 \\ a2,1 & a2,2 & a2,3 \\ a3,1 & a3,2 & a3,3 \\ a4,1 & a4,2 & a4,3 \end{pmatrix} \cdot \begin{pmatrix} VIGV \\ ET \\ VIGV^2 \end{pmatrix} = \begin{pmatrix} PCO \\ TCO \\ TOCC \\ POT \end{pmatrix}$$

wherein:

- the operating parameters are: VIGV indicating the VIGV position i.e. opening; ET indicating the environmental temperature;
- the control parameters are: PCO indicating the air pressure at the compressor outlet; TCO indicating the air temperature at the compressor outlet; TOCC indicating the hot gas temperature at the outlet of the combustion chamber; POT indicating the hot gas pressure at the outlet of the turbine.

The polynomial function is advantageously able to represent any machine or combination of machines.

Alternatively, the functions can be defined via a simulation software of the machine such as a gas turbine. As known, the operation of a gas turbine (or a machine or combination of machines in general) can be simulated (online or off line) by a dedicated software, which based on input signals provides outputs, in the form of status parameters of the gas turbine, of the compressed air and/or of the hot gas flowing through the gas turbine.

The monitoring method of the invention can take advantage of this software and can provide the operating parameters as input signals to the simulation software in order to get the control parameters as output signals.

The simulation software is advantageously able to reproduce the machine behavior over the whole spectrum of operation and possible "normal" sharp changes of the control parameters (i.e. corresponding to the normal operation of the machine such that these sharp changes are expected), can be followed as well, whereas with other functions this could not be possible.

In case the functions are defined via the simulation software, preferably via tuning coefficients, the function can be written as

$$\begin{pmatrix} Tf1 \\ \vdots \\ \vdots \\ Tfn \end{pmatrix} \cdot f \begin{pmatrix} OP1 \\ \vdots \\ OPn \end{pmatrix} = \begin{pmatrix} CP1 \\ \vdots \\ \vdots \\ CPm \end{pmatrix}$$

where

- Tf1..Tfn: are tuning coefficients that take into account the possibility of mismatch between data calculated by the model and real data; ideally these coefficient are equal to 1 and therefore the model perfectly reproduces the gas turbine behaviour;
- $f$(OP1...OPn): represent the model, i.e. the function f () (being the model) receives the operating parameters OP1..OPn as an input and provides the control parameters CP1...CPm as an output;
- OP1...OPn: are the operating parameters that are provided as an input to the model;
- CP1...CPm are the control parameters.

Also in this case, like in the case of polynomial functions, the coefficients can be defined by operating the machine, measuring the operating parameters and the control parameters, providing the operating parameters as an input to the model f() to calculate the control parameters and selecting appropriate coefficients, such that the control parameters calculated by the model f() match (i.e. are equal to) the measured control parameters.

The use of the model has some advantages over the use of the polynomial functions, e.g. it provides a validation of the model, because if the tuning coefficients are constants equal to 1 the model perfectly reproduces the gas turbine behaviour; it is in addition typically simpler managing the tuning coefficients of the method that uses the model than the coefficients of the method that uses the polynomial functions, because the tuning coefficients are ideally 1 (i.e. they are known in advance in the ideal case) .

Once the functions are defined, the gas turbine is operated and, according to the monitoring method, the control parameters and the operating parameters are measured while the gas turbine is operating.

On the basis of the measured operating parameters, the control parameters are thus calculated by means of the functions.

The control parameters that have been calculated in this way are the ones that are expected in case of a "regular" operation of the gas turbine, i.e. in case the gas turbine operates free of the small damages affecting the operation in an amount too small to be detected by the safety system but potentially having a dramatic impact in the long term operation.

In order to monitor small damages that may affect the machine even if they do not cause intervention of the safety system, the measured control parameters are compared with the calculated control parameters (i.e. the control parameters calculated using the functions) and an alarm is generated when the measured control parameters and calculated control parameters do not match.

Matching of the measured control parameters and calculated control parameters is ascertained when (i) the difference between measured control parameters and calculated control parameters is below a given threshold value and/or (ii) the courses of the measured control parameters and calculated control parameters do not cross one another for a given time interval.

In different examples of the method either any of the criteria or both criteria can be used to judge whether the measured control parameters and calculated control parameters match. For example criterium (i) can be used to ensure that the measured control parameters do not differ from the calculated control parameters for a too large amount; criterium (ii) can be used to check that the measured control parameters follow i.e. reproduce the course of the calculated control parameters, criteria (i) and (ii) together can be used to check correct operation even with large margins of each of the criteria (i) and (ii), to avoid undesired false alarms but at the same time ensuring detection of malfunctioning.

A fitting time window is defined and, based on the operating parameters and control parameters that have been measured through the fitting time window, the coefficients linking the control parameters and operating parameters are adjusted, such that the coefficients can always correctly reproduce the control parameters based on the operating parameters.

Advantageously, the fitting time window is temporally shifted over time, such that the functions are continuously or periodically adjusted, therefore wear due to usual ageing can be taken into account avoiding generation of unjustified alarms.

In different embodiments, the fitting time window can be continuously or periodically shifted forward over time; the method can in this case be implemented in real time, to carry out real time supervision of the gas turbine.

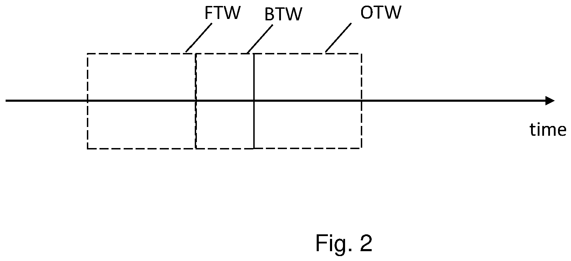

The method also comprises (figure 2) defining an operating time window OTW, which is temporally shifted after the fitting time window FTW, and using over the whole operating time window OTW the functions that have been adjusted in connection with the fitting time window FTW.

For example, the fitting time window FTW can have a length of one week and can be periodically temporally shifted forwards each week of one week, such that the fitting time window FTW occurs the week preceding the operating time window that in turn can have a length of one week as well.

In a different example, the fitting time window FTW can be continuously shifted forwards; in this example the fitting time window can have a length of one week starting 168 hours before the time of actual method implementation.

In addition, between the operating time window OTW and the fitting time window FTW, a black time window BTW can be provided. During this black time window BTW the control parameters and operating parameters are not sampled or in case they are sampled they are not used. This can for example disconnect the fitting time window from the operating time window so preventing that changes in the measures of the control parameters and operating parameters are confused with measurements changes due to machine aging or signal noise.

In addition, temporally longer and shorter fitting time windows are also defined. Thus, longer and shorter control parameters are calculated as indicated above on the basis of the longer and shorter fitting time windows.

In this case, the longer fitting time window is timely removed from the actual operating time and the shorter fitting time window is timely closer to the actual operating time.

As an example, the longer fitting time window can be foreseen one week before the actual operating time; According to the invention, the longer fitting time window is temporally shifted over time according to the actual operating time; in this case the beginning or the end of the longer fitting time window can be timely one week before the start of the longer operating time window.

Likewise, the shorter fitting time window can be foreseen one hour before the actual operating time;

According to the invention, the shorter fitting time window is temporally shifted over time according to the actual operating time; in this case the beginning or the end of the shorter fitting time window can be timely one hour before the start of the shorter operating time window.

The use of the longer fitting time window close to the actual operating time lets the model be able to correctly foresee the gas turbine operation (and thus calculate the control parameters based on the input operating parameters) in different operating conditions, e.g. part load, full load, etc.

The use of the shorter fitting time window lets the actual operation of the machine be monitored with a recently fitted model (e.g. part load or full load or other). Therefore, with the shorter fitting time window sudden changes of the gas turbine operation , even with small signal steps, can be monitored thanks to a very well fitted model because it was adjusted in the short time window and close to the actual operating time, therefore it precisely reproduces the operation of the gas turbine.

The use of both longer and shorter fitting time windows lets changes due to the gas turbine operation (e.g. from full load to part load) which may cause a deviation from the model with the short fitting time window be recognized as normal operation from the model with the long fitting time window. Thus, a false alarm can be avoided.

The measured control parameters are therefore compared with the calculated longer and shorter control parameters and the alarm is generated when (i) at least one of the calculated longer and shorter control parameter set does not match with the measured control parameters, or (ii) both the calculated longer and shorter control parameter set do not match with the measured control parameters.

The method can advantageously be implemented on the basis of registered data (i.e. data collected in the past) or data continuously measured on an operating gas turbine (real time implementation of the method).

The method of the invention is particularly advantageous because it provides reliable results but is computationally not demanding.

In addition, the method requires small data amount to be implemented and advantageously the small data amount refers to correct operation of the machine and not to failures thereof, therefore collecting such data is easy and fast, even with a small machine fleet or also one single machine.

Naturally the features described may be independently provided from one another. In practice the materials used and the dimensions can be chosen at will according to requirements and to the state of the art.

**Claims**

1. A method for monitoring the operation of a machine (1) comprising:

   a. providing at least a function linking at least one control parameter to at least one operating parameter;
   b. operating the machine and measuring the at least one control parameter and the at least one operating parameter while the machine (1) is operating;
   c. on the basis of the at least one measured operating parameter, calculating by means of the at least a function the at least one control parameter;
   d. comparing the at least one measured control parameter with the at least one calculated control parameter and generating an alarm when they do not match,
   e. defining a fitting time window (FTW);
   f. adjusting the at least a function based on the at least a measured operating parameter and at least a measured control parameter measured through the fitting time window (FTW);
   g. defining an operating time window (OTW), which is temporally shifted after the fitting time window (FTW); and
   h. using over the whole operating time window (OTW) the at least a function adjusted based on the fitting time window (FTW);

   **characterized by**:

   - defining a temporally longer fitting time window and a temporally shorter fitting time window,
   - calculating at least one longer control parameter and at least one shorter control parameter on the basis of the longer and shorter fitting time windows;
   - comparing the at least one measured control parameter with the at least one calculated longer and shorter control parameter;
   - generating an alarm when at least one of the at least one calculated longer and shorter control parameters does not match with the at least one measured control parameter;
   and further **characterized in that** the longer fitting time window is timely removed from an actual operating time of the machine and the shorter fitting time window is timely closer to the actual operating time; and
   the longer fitting time window and the shorter fitting time window are temporally shifted over time according to the actual operating time.

2. The method of claim 1, **characterized by** repeating the steps b. through f.

3. The method of any of the previous claims, **characterised in that** matching of the at least one measured control parameter and at least one calculated control parameter is ascertained when:

   - the difference between the at least one measured control parameter and the at least one calculated control parameter is below a given threshold value; and/or
   - the courses of the at least one measured control parameter and at least one calculated control parameter do not cross one another for a given time interval.

4. The method of any of the previous claims, **characterized in that** between the operating time window and the fitting time window a black time window (BTW) is provided,
   wherein the at least one control parameter and at least one operating parameter are not sampled during the black time window (BTW) or in case they are sampled they are not used.

5. The method of any of the previous claims, **characterised in that** the alarm is generated when both the at least one calculated longer and shorter control parameters do not match with the at least one measured control parameter.

6. The method of any of the previous claims, **characterised by** being implemented during real time operation of the machine.

7. The method of any of claims 1 through 6, **characterised in that** the at least a function linking the at least one control parameter to at least one operating parameter is a polynomial function.

8. The method of any of claims 1 through 6, **characterised in that** the at least a function is defined via a simulation software of the machine, preferably via tuning coefficients.

9. The method of any of the previous claims, **characterised in that** the machine is a gas turbine or an electric generator or a steam turbine or a power plant for electric power generation.

10. A computer program having a program code for performing the method according to anyone of claims 1 through 9 when executed.

11. A computer-implemented system for monitoring the operation of a machine (1) comprising:

   - at least a first sensor (10) to measure at least a control parameter of the machine (1);
   - at least a second sensors (11) to measure at least an operating parameter of the machine;
   - a memory (12) arranged to store the data measured by the first sensors (10) and second sensors (11);
   - an elaborating unit (15) connected to and arranged for receiving data from the memory (12), the elaborating unit having a code running thereon for implementing the method of any of claims 1 through 9.

12. The computer-implemented system of claim 11, **characterised in that** one electronic device defines the elaborating unit (15) and the memory (12).

13. The computer-implemented system of any of claims 11 through 12, **characterised in that** the machine is a gas turbine or an electric generator or a steam turbine or a power plant for electric power generation.

**Patentansprüche**

1. Verfahren zum Überwachen des Betriebs einer Maschine, umfassend:

   a. Bereitstellen wenigstens einer Funktion, die wenigstens einen Steuerparameter mit wenigstens einem Betriebsparameter verknüpft;
   b. Betreiben der Maschine und Messen des wenigstens einen Steuerparameters und des wenigstens einen Betriebsparameters, während die Maschine (1) in Betrieb ist;
   c. auf der Grundlage des wenigstens einen gemessenen Betriebsparameters, Berechnen des wenigstens einen Steuerparameters mittels der wenigstens einen Funktion;
   d. Vergleichen des wenigstens einen gemessenen Steuerparameters mit dem wenigstens einen berechneten Steuerparameter und Erzeugen eines Alarms, wenn diese nicht übereinstimmen,
   e. Definition eines Anpassungszeitfensters (FTW);
   f. Einstellen der wenigstens einen Funktion basierend auf wenigstens einem gemessenen Betriebsparameter und wenigstens einem gemessenen Steuerparameter, der über das Anpassungszeitfenster (FTW) gemessen wurde;
   g. Definieren eines Betriebszeitfensters (OTW), das zeitlich hinter das Anpassungszeitfenster (FTW) verschoben ist; und
   h. Verwenden der wenigstens einen Funktion, die basierend auf dem Anpassungszeitfenster (FTW) eingestellt worden ist, über das gesamte Betriebszeitfenster (OTW);

   **gekennzeichnet durch**:

   - Definieren eines zeitlich längeren Anpassungszeitfensters und eines zeitlich kürzeren Anpassungszeitfensters,
   - Berechnen wenigstens eines längeren Steuerparameters und wenigstens eines kürzeren Steuerparameters auf der Grundlage des längeren und des kürzeren Anpassungszeitfensters;
   - Vergleichen des wenigstens einen gemessenen Steuerparameters mit dem wenigstens einen berechneten längeren und kürzeren Steuerparameter;
   - Erzeugen eines Alarms, wenn wenigstens einer des wenigstens einen berechneten längeren bzw. kürzeren Steuerparameters nicht mit dem wenigstens einen gemessenen Steuerparameter übereinstimmt;
   und ferner **dadurch** gekennzeichnet, dass das längere Anpassungszeitfenster von einer tatsächlichen Betriebszeit der Maschine zeitlich entfernt liegt und das kürzere Anpassungszeitfenster zeitlich näher an der tatsächlichen Betriebszeit liegt; und
   das längere Anpassungszeitfenster und das kürzere Anpassungszeitfenster entsprechend der tatsächlichen Betriebszeit zeitlich verschoben werden.

2. Verfahren nach Anspruch 1, **gekennzeichnet durch** eine Wiederholung der Schritte b. bis f.

3. Verfahren nach einem der vorangehenden Ansprüche, **dadurch gekennzeichnet, dass** eine Übereinstimmung des wenigstens einen gemessenen Steuerparameters und des wenigstens einen berechneten Steuerparameters festgestellt wird, wenn:

   - die Differenz zwischen dem wenigstens einen gemessenen Steuerparameter und dem wenigstens einen berechneten Steuerparameter unter einem vorgegebenen Schwellenwert liegt; und/oder
   - die Verläufe des wenigstens einen gemessenen Steuerparameters und des wenigstens einen berechneten Steuerparameters sich für ein gegebenes Zeitintervall nicht kreuzen.

4. Verfahren nach einem der vorangehenden Ansprüche, **dadurch gekennzeichnet, dass** zwischen dem Betriebszeitfenster und dem Anpassungszeitfenster ein Schwarzzeitfenster (BTW) vorgesehen ist, wobei der wenigstens eine Steuerparameter und wenigstens ein Betriebsparameter während des Schwarzzeitfensters (BTW) nicht abgetastet werden oder, falls sie abgetastet werden, nicht verwendet werden.

5. Verfahren nach einem der vorangehenden Ansprüche, **dadurch gekennzeichnet, dass** der Alarm erzeugt wird, wenn sowohl der wenigstens eine berechnete längere als auch der wenigstens eine berechnete kürzere Steuerparameter nicht mit dem wenigstens einen gemessenen Steuerparameter übereinstimmen.

6. Verfahren nach einem der vorangehenden Ansprüche, **dadurch gekennzeichnet, dass** es während des Echtzeitbetriebs der Maschine implementiert wird.

7. Verfahren nach einem der Ansprüche 1 bis 6, **dadurch gekennzeichnet, dass** die wenigstens eine Funktion, die den wenigstens einen Steuerparameter mit wenigstens einem Betriebsparameter verknüpft, eine Polynomfunktion ist.

8. Verfahren nach einem der Ansprüche 1 bis 6, **dadurch gekennzeichnet, dass** die wenigstens eine Funktion über eine Simulationssoftware der Maschine definiert wird, vorzugsweise über Abstimmungskoeffizienten.

9. Verfahren nach einem der vorangehenden Ansprüche, **dadurch gekennzeichnet, dass** die Maschine eine Gasturbine oder ein elektrischer Generator oder eine Dampfturbine oder ein Kraftwerk zur Stromerzeugung ist.

10. Computerprogramm mit einem Programmcode zum Durchführen des Verfahrens nach einem der Ansprüche 1 bis 9, wenn es ausgeführt wird.

11. Computerimplementiertes System zum Überwachen des Betriebs einer Maschine (1), umfassend

    - wenigstens einen ersten Sensor (10) zum Messen wenigstens eines Steuerparameters der Maschine (1);
    - wenigstens einen zweiten Sensor (11) zum Messen wenigstens eines Betriebsparameters der Maschine;
    - einen Speicher (12), der zum Speichern der von den ersten Sensoren (10) und den zweiten Sensoren (11) gemessenen Daten eingerichtet ist;
    - eine Verarbeitungseinheit (15), die mit dem Speicher (12) verbunden und für den Empfang von Daten aus diesem eingerichtet ist, wobei die Verarbeitungseinheit einen darauf laufenden Code aufweist, um das Verfahren nach einem der Ansprüche 1 bis 9 zu implementieren.

12. Computerimplementiertes System nach Anspruch 11, **dadurch gekennzeichnet, dass** eine elektronische Vorrichtung die Ausarbeitungseinheit (15) und den Speicher (12) bildet.

13. Computerimplementiertes System nach einem der Ansprüche 11 bis 12, **dadurch gekennzeichnet, dass** die Maschine eine Gasturbine oder ein elektrischer Generator oder eine Dampfturbine oder ein Kraftwerk zur Stromerzeugung ist.

**Revendications**

1. Procédé de surveillance du fonctionnement d'une machine (1) comprenant :

   a. la fourniture d'au moins une fonction reliant au moins un paramètre de contrôle à au moins un paramètre de fonctionnement ;

b. l'actionnement de la machine et la mesure d'au moins un paramètre de contrôle et d'au moins un paramètre de fonctionnement pendant que la machine (1) fonctionne ;

c. sur la base d'au moins un paramètre de fonctionnement mesuré, le calcul, au moyen d'au moins une fonction, d'au moins un paramètre de contrôle ;

d. la comparaison de l'au moins un paramètre de contrôle mesuré avec l'au moins un paramètre de contrôle calculé et le déclenchement d'une alarme en cas de non-concordance,

e. la définition d'une fenêtre temporelle d'ajustement (FTW) ;

f. l'ajustement d'au moins une fonction sur la base de l'au moins un paramètre de fonctionnement mesuré et de l'au moins un paramètre de contrôle mesuré à travers la fenêtre temporelle d'ajustement (FTW) ;

g. la définition d'une fenêtre temporelle opérationnelle (OTW), qui est décalée dans le temps après la fenêtre temporelle d'ajustement (FTW) ;
et

h. l'utilisation sur l'ensemble de la fenêtre temporelle opérationnelle (OTW) d'au moins une fonction

ajustée sur la base de la fenêtre temporelle d'ajustement (FTW) ;
**caractérisé par** :

- la définition d'une fenêtre temporelle d'ajustement plus longue et d'une fenêtre temporelle d'ajustement plus courte,
- le calcul d'au moins un paramètre de contrôle plus long et d'au moins un paramètre de contrôle plus court sur la base des fenêtres temporelles d'ajustement plus longues et plus courtes ;
- la comparaison de l'au moins un paramètre de contrôle mesuré avec l'au moins un paramètre de contrôle plus long et plus court calculé ;
- le déclenchement d'une alarme lorsque l'un au moins des paramètres de contrôle plus long et plus court calculés ne correspond pas à l'un au moins des paramètres de contrôle mesurés ;
et **caractérisé en outre par le fait que** la fenêtre temporelle d'ajustement plus longue s'éloigne à temps d'un temps de fonctionnement
réel de la machine et plus la fenêtre temporelle d'adaptation est courte, plus elle est proche du temps de fonctionnement réel ; et
la fenêtre temporelle d'ajustement plus longue et la fenêtre temporelle d'ajustement plus courte sont décalées dans le temps en fonction du temps de fonctionnement réel.

2. Procédé selon la revendication 1, **caractérisé par** la répétition des étapes b. à f.

3. Procédé selon l'une quelconque des revendications précédentes, **caractérisé en ce que** la correspondance entre au moins un paramètre de contrôle mesuré et au moins un paramètre de contrôle calculé est établie lorsque :

- la différence entre l'au moins un paramètre de contrôle mesuré et l'au moins un paramètre de contrôle calculé est inférieure à une valeur seuil donnée ; et/ou
- les courses d'au moins un paramètre de contrôle mesuré et d'au moins un paramètre de contrôle calculé ne se croisent pas pendant un intervalle de temps donné.

4. Procédé selon l'une quelconque des revendications précédentes, **caractérisé en ce que** la fenêtre temporelle de fonctionnement et la fenêtre temporelle d'ajustement sont séparées par une fenêtre temporelle noire,

dans lequel au moins un paramètre de contrôle et au moins un paramètre de fonctionnement ne sont pas échantillonnés pendant la fenêtre temporelle noire (BTW)
ou s'ils sont échantillonnés, ils ne sont pas utilisés.

5. Procédé selon l'une quelconque des revendications précédentes, **caractérisé en ce que** l'alarme est générée lorsque les deux au moins un paramètre de contrôle calculé, plus long et plus court, ne correspondent pas au moins à un paramètre de contrôle mesuré.

6. Procédé selon l'une quelconque des revendications précédentes, **caractérisé en ce qu'**il est mis en oeuvre pendant le fonctionnement en temps réel de la machine.

7. Procédé selon l'une quelconque des revendications 1 à 6, **caractérisé en ce que** l'au moins une fonction reliant l'au moins un paramètre de contrôle à l'au moins un paramètre de fonctionnement est une fonction polynomiale.

8. Procédé selon l'une quelconque des revendications 1 à 6, **caractérisé en ce que** l'au moins une fonction est définie par un logiciel de simulation de la machine, de préférence par des coefficients de réglage.

9. Procédé selon l'une quelconque des revendications précédentes, **caractérisé en ce que** la machine est une turbine à gaz, ou un générateur électrique, ou une turbine à vapeur ou une centrale électrique pour la production d'énergie électrique.

10. Programme d'ordinateur comportant un code de programme pour l'exécution du procédé selon l'une quelconque des revendications 1 à 9 lorsqu'il est exécuté.

11. Système mis en oeuvre par ordinateur pour surveiller le fonctionnement d'une machine (1) comprenant :

- au moins un premier capteur (10) pour mesurer au moins un paramètre de contrôle de la machine (1) ;
- au moins un deuxième capteur (11) pour mesurer au moins un paramètre de fonctionnement de la machine ;
- une mémoire (12) conçue pour stocker les données mesurées par les premiers capteurs (10) et les seconds capteurs (11) ;
- une unité de traitement (15) connectée à la mémoire (12) et conçue pour recevoir des données de cette dernière, l'unité de traitement étant dotée d'un code permettant de mettre en oeuvre le procédé décrit dans l'une quelconque des revendications 1 à 9.

12. Système mis en oeuvre par ordinateur de la revendication 11, **caractérisé en ce qu'**un dispositif électronique définit l'unité de traitement (15) et la mémoire (12).

13. Système mis en oeuvre par ordinateur selon l'une quelconque des revendications 11 à 12, **caractérisé en ce que** la machine est une turbine à gaz, ou un générateur électrique, ou une turbine à vapeur ou une centrale électrique pour la production d'énergie électrique.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015185716 A1
- EP 2570616 A2
- EP 3628851 A1